# FASCICULE DE BREVET EUROPEEN

(11) **EP 1 327 386 B1**
(45) Date de publication et mention de la délivrance du brevet: **31.05.2006**
(21) Numéro de dépôt: 02293257.8
(22) Date de dépôt: 30.12.2002
(51) Int. Cl.: A01K 1/06

(54) **Barrière à cornadis**
Selbstfanggitter
Stanchion

(30) Priorité: 10.01.2002 FR 0200232
(43) Date de publication de la demande: 16.07.2003
(73) Titulaire: Jourdain S.A., 45300 Escrennes (FR)
(72) Inventeur: Simonneau, Françis Albert, 45140 St Jean de la Ruelle (FR)
(74) Mandataire: Vander-Heym, Serge Henri Marcel

(56) Documents cités:
- EP-A- 0 940 075
- EP-A- 1 040 753
- FR-A- 2 789 850
- US-A- 5 878 697

## Description

La présente invention est relative à des perfectionnements aux barrières à cornadis.

Dans sa forme la plus simple, une barrière à cornadis se compose d'une succession d'ouvertures délimitées, chacune, par un montant vertical réunissant deux longerons horizontaux, respectivement supérieur et inférieur, et par un bras pivotant.

Le bras pivotant peut être verrouillé pour empêcher l'accès à l'auge ou pour maintenir l'animal et permettre son alimentation ou son examen.

Dans la plupart des systèmes, le verrouillage s'effectue à la partie supérieure de la barrière et met en oeuvre une tringle pivotante s'étendant au-dessus du longeron supérieur. Le déverrouillage de tous les cornadis s'effectue par la rotation de la tringle pivotante, mais il est également possible de déverrouiller, un par un, chaque cornadis.

Selon la technique la plus répandue, le bras pivotant présente à sa partie supérieure une fourche, entre les ailes de laquelle passent le longeron supérieur et la tringle pivotante qui présente des crans dans chacun desquels tombe un arbre coulissant porté par ladite fourche. Un tel dispositif est décrit, notamment, dans la demande de brevet européen publiée sous le n°1040753.

Pour déverrouiller un cornadis, l'exploitant doit soulever l'arbre coulissant en tendant le bras pour passer entre les cornes de l'animal entravé, ce qui est peu pratique, voire dangereux. Cette manoeuvre s'effectue en saisissant les écrous latéraux qui immobilisent latéralement l'arbre coulissant.

L'expérience a montré que ces écrous latéraux, qui forment des saillies, sont astucieusement utilisés par les animaux pour provoquer le soulèvement de l'arbre coulissant, soit en utilisant la langue soit par le frottement des oreilles ou des cornes avec tous les inconvénients que cela entraîne.

Selon la présente invention, qui remédie à ces inconvénients, la longueur de l'arbre coulissant est légèrement inférieure à la distance séparant les faces externes de la fourche, ledit arbre comportant des moyens pour assurer son guidage dans les lumières usuelles de la fourche.

Selon une autre caractéristique de l'invention, l'arbre coulissant comporte des moyens permettant de le soulever à distance, à l'aide d'un bâton par exemple.

La présente invention sera mieux comprise par la description qui va suivre faite en se référant aux dessins annexés à titre d'exemple indicatif, seulement, sur lesquels:

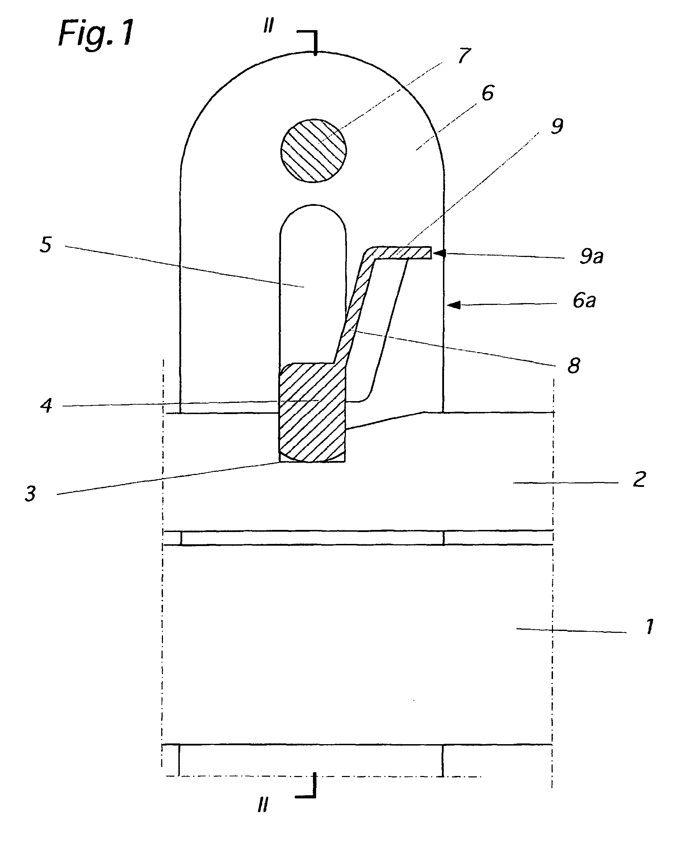

- la figure 1 est une vue partielle et en coupe longitudinale montrant une fourche comportant le dispositif de l'invention;

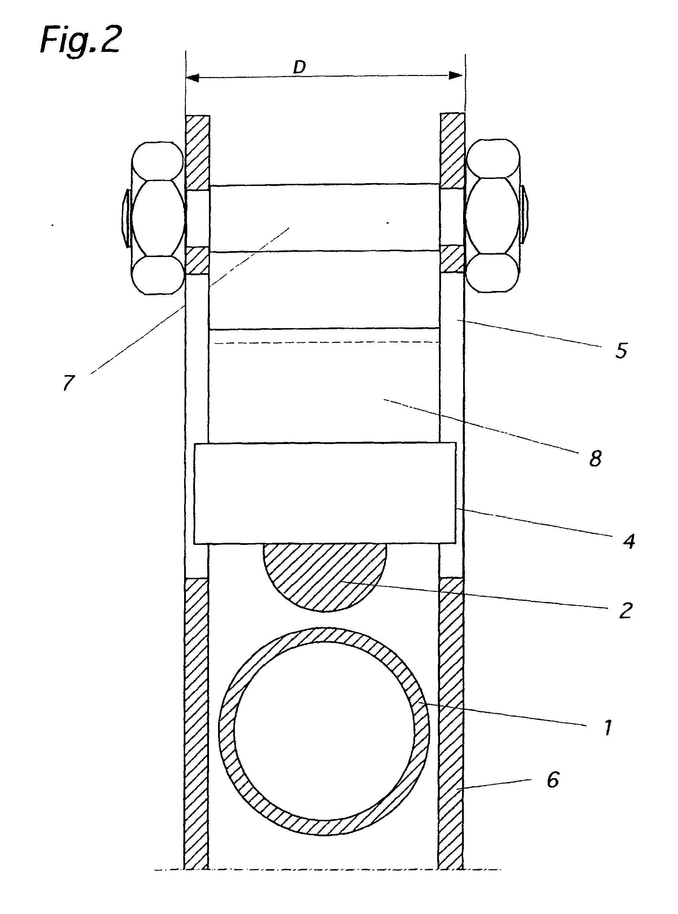

- la figure 2 est une vue en coupe effectuée selon la ligne II-II de la figure 1;

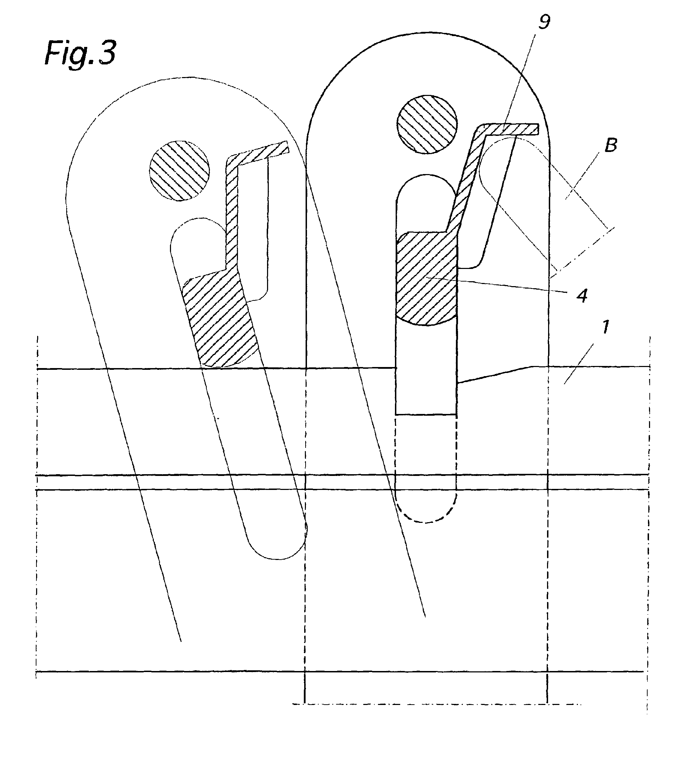

- la figure 3 est une vue, analogue à celle 1, montrant le soulèvement de l'arbre coulissant.

De la façon connue, 1 est le longeron supérieur de la barrière et 2 la tringle pivotante comportant des crans 3 dans chacun desquels peut tomber un arbre 4 guidé dans des lumières 5 des ailes 6 d'une fourche située à la partie supérieure du bras pivotant (non représenté) et entre lesquelles passent librement ledit longeron et ladite tringle. De la façon connue, le dispositif est complété par une entretoise 7 maintenant le parallélisme des ailes 6.

Selon l'invention, la longueur de l'arbre 4 est inférieure à la distance D séparant les faces externes des ailes de la fourche et des moyens sont prévus pour s'opposer au déplacement axial dudit arbre.

Selon un mode de réalisation, l'arbre 4 présente une languette 8 dont les bords latéraux s'étendent, au jeu près, jusqu'aux faces internes des ailes de la fourche. Des moyens sont prévus pour s'opposer à la rotation de l'arbre 4 autour de son axe. Dans cet esprit, l'arbre 4 présente une section oblongue pour s'opposer au pivotement de la languette 8.

A sa partie supérieure, la languette 8 présente une partie 9, recourbée vers l'extérieur. De cette façon, il est possible, à l'aide d'une tringle ou d'un bâton B de soulever, à distance, l'arbre 4 pour libérer un animal.

La mise en place de l'arbre 4 s'effectue, avant la mise en place de l'entretoise 7, en engageant légèrement à force ledit arbre entre les ailes 6.

Il est à noter que la partie 9 ne s'étend pas au-delà des champs 6a des ailes mais reste, au contraire, légèrement en retrait par rapport à ceux-ci.

L'ensemble 4-8-9 s'inscrit dans un volume qui reste contenu dans celui délimité par la fourche et ne présente donc pas d'aspérité pouvant servir de point d'appui accessible par l'animal.

## Revendications

1. Barrière à cornadis comportant des bras pivotants, à la partie supérieure de chacun desquels est disposée une fourche entre les ailes (6) de laquelle passent le longeron supérieur (1) et une tringle pivotante (2) présentant des crans (3) dans chacun desquels peut tomber un arbre (4) coulissant guidé par ladite fourche, **caractérisée en ce que** la longueur de l'arbre coulissant (4) est inférieure à la distance séparant les faces externes de la fourche et **en ce que** des moyens sont prévus pour s'opposer au déplacement axial dudit arbre.

2. Barrière selon la revendication 1, **caractérisée en ce que** des moyens sont prévus pour s'opposer à la rotation de l'arbre (4) autour de son axe.

3. Barrière selon la revendication 2, **caractérisée en ce que** l'arbre (4) présente une section oblongue.

4. Barrière selon l'une quelconque des revendications 1 à 3, **caractérisée en ce que** l'arbre (4) présente une languette (8) dont les bords latéraux s'étendent, au jeu près, jusqu'aux faces internes des ailes de la fourche.

5. Barrière selon la revendication 4, **caractérisée en ce que** la languette présente une partie recourbée (9) dont l'extrémité (9a) ne s'étend pas au-delà des champs des ailes de la fourche.

## Claims

1. A feeding yoke trap barrier having pivotally mounted arms, at the top of each of which a fork is disposed, between the prongs (6) of which the top longitudinal member (1) and a pivotally mounted rod (2) pass, said rod being provided with notches (3) into each of which a slidably mounted shaft (4) guided by said fork can fall, said feeding yoke trap barrier being **characterized in that** the length of the slidably mounted shaft (4) is less than the distance between the outside faces of the fork, and **in that** means are provided for opposing any axial displacement of said shaft.

2. A barrier according to claim 1, **characterized in that** means are provided for opposing any rotation of the shaft (4) about its axis.

3. A barrier according to claim 2, **characterized in that** the shaft (4) is oblong in section.

4. A barrier according to any one of claims 1 to 3, **characterized in that** the shaft (4) has a tongue (8) whose side edges extend, ignoring clearance, to the inside faces of the prongs of the fork.

5. A barrier according to claim 4, **characterized in that** the tongue has a curved-back portion (9) whose end (9a) does not extend beyond the fields of the prongs of the fork.

## Patentansprüche

1. Fressgitterbarriere mit schwingenden Armen, bei denen an jedem oberen Teil eine Gabel angeordnet ist, zwischen deren Flügeln (6) der obere Längsträger (1) und eine schwingende Stange (2) mit Einkerbungen (3) durchtreten, in die jeweils eine von der genannten Gabel geführte gleitende Welle (4) hineinfallen kann, **dadurch gekennzeichnet, dass** die Länge der gleitenden Welle (4) geringer ist als die die Außenseiten der Gabel trennende Entfernung und dass Mittel vorgesehen sind, um der axialen Verschiebung der genannten Welle entgegenzuwirken.

2. Barriere gemäß Anspruch 1, **dadurch gekennzeichnet, dass** Mittel vorgesehen sind, um der Rotation der Welle (4) um ihre Achse entgegenzuwirken.

3. Barriere gemäß Anspruch 2, **dadurch gekennzeichnet, dass** die Welle (4) einen länglichen Abschnitt aufweist.

4. Barriere gemäß Anspruch 1 bis 3, **dadurch gekennzeichnet, dass** die Welle (4) eine Zunge (8) aufweist, deren laterale Ränder sich bis auf ein Spiel bis zu den Innenseiten der Flügel der Gabel erstrecken.

5. Barriere gemäß Anspruch 4, **dadurch gekennzeichnet, dass** die Zunge einen zurückgebogenen Teil (9) aufweist, dessen Ende (9a) sich nicht über die Felder der Flügel der Gabel hinaus erstrecken.
